# DEMANDE DE BREVET EUROPEEN

(11) **EP 1 250 015 A1**
(43) Date de publication de la demande: **16.10.2002**
(21) Numéro de dépôt: 01400933.6
(22) Date de dépôt: 11.04.2001
(51) Int. Cl.: H04Q 7/20, H04B 7/185

(54) **Système de télécommunication cellulaire a satellite relais**

(71) Demandeur: Deltafone, Boulogne Billancourt (FR)
(72) Inventeur: d'Allest, Frédéric, 92190 Meudon (FR)
(74) Mandataire: Fort, Jacques

(57) **Abrégé**

Le système de télécommunication permet de mettre en liaison des terminaux répartis dans plusieurs territoires (13), entre eux et avec au moins un réseau d'opérateur ; ce système comprend au moins un satellite relais (14) muni de moyens de liaison d'une part avec un centre de communication et de contrôle (10) raccordé à un réseau d'opérateur, d'autre part avec plusieurs stations de base (12) affectées chacune à un territoire et comportant chacune un commutateur (16) d'établissement des liaisons locales entre les terminaux répartis dans le territoire et d'établissement de liaisons avec le centre de communication par l'intermédiaire du satellite, en vue d'établissement des communications autres qu'internes au territoire.

## Description

La présente invention concerne les systèmes de télécommunication cellulaire ayant un centre de communication et de contrôle muni d'un commutateur permettant d'effectuer des liaisons avec un réseau d'opérateur, généralement un réseau public de téléphonie, et des stations de base ayant chacune un émetteur récepteur de liaison avec les terminaux mobiles et/ou fixes situés dans un territoire desservi par la station.

Pour équiper des zones démunies d'une infrastructure téléphonique terrestre, telles que des régions en voie de développement ou à faible densité de population, les réseaux de téléphonie cellulaire utilisant des liaisons radio constituent une solution avantageuse. En effet, il suffit d'un petit nombre de stations de base pour desservir des abonnés nombreux et répartis sur des territoires étendus (jusqu'à 35 km à partir de la station de base dans le cas du GSM, cette distance correspondant à la durée d'une tranche). Les investissements requis par le raccordement filaire des postes d'abonné sont évités.

A l'heure actuelle, les stations de base des réseaux de télécommunication cellulaire tels que GSM comportent des stations de base sont reliées en étoile au centre de communication et de contrôle et comportent simplement chacune un émetteur-récepteur radio et un contrôleur de station de base. Le centre de communication et de contrôle gère les appels entre abonnés, sans faire la différence entre l'établissement de communications entre abonnés situés dans un même territoire ou cellule et l'établissement d'une communication d'autre nature. Une telle architecture fait transiter dans tous les cas les signaux de signalisation et d'établissement de liaison, puis les signaux de voix et éventuellement de données, entre le centre de communication et au moins une station de base. Les liaisons entre les stations de base et le centre de communication doivent avoir une bande passante suffisante pour écouler l'ensemble de ce trafic. Les ressources à créer représentent un investissement important et sont longues à établir, notamment dans le cas habituel de liaisons filaires entre les stations de base et le centre de communication.

On connaît (WO 99/03212) un système de télécommunication comportant plusieurs stations constituant des passerelles, affectées chacune à une zone géographique particulière. Ces passerelles communiquent entre elles par l'intermédiaire d'un satellite qui est également utilité pour accéder à des terminaux d'utilisateurs.

On connaît également (EP 0 755 163) un système de télécommunication avec des mobiles, dont une caractéristique essentielle est l'application exclusive à la téléphonie mobile.

L'invention part de plusieurs constatations : un grand nombre d'appels se font à l'intérieur d'un même territoire, en particulier lorsque ce territoire est étendu, ce qui est le cas général en zone rurale ou peu peuplée ; les liaisons par satellite permettent d'éviter la mise en place d'une infrastructure filaire ou de faisceaux hertziens. Elle propose en conséquence un système de télécommunication suivant la revendication 1 ; d'autres caractéristiques sont données dans les sous-revendications.

Grâce à la disposition revendiquée, les communications à l'intérieur d'un même territoire s'effectuent sans encombrer la bande passante avec le centre de communication et de contrôle, en réservant ainsi toute cette bande passante pour les communications vers le réseau d'opérateur ou vers d'autres territoires. Dans le cas de ces communications "externes", le commutateur de la station de base n'intervient que pour orienter la communication vers le lien satellite. Grâce à l'utilisation d'un satellite relais, avantageusement en orbite géostationnaire de façon à écarter les problèmes de transfert de liaisons d'un satellite à un autre, les investissements exigés par les liaisons filaires sont évitées.

Ces avantages sont obtenus en constituant chaque station de base de façon que chaque territoire constitue un micro réseau équipé de fonctions de commutation lui permettant un fonctionnement interne autonome et également en utilisant une liaison par satellite avec le centre de communication et de contrôle. Les micro-réseaux, même s'ils sont fonctionnellement indépendants, sont avantageusement supervisés par un même organe de gestion du réseau situé au centre de communication et de contrôle.

Il peut y avoir plusieurs centres de communication et des moyens de sélection de centre au niveau des stations de base, par exemple en fonction de la destination d'un appel.

Chaque station de base comporte un sous-ensemble ayant, en plus d'au moins un émetteur-récepteur et d'un contrôleur remplissant le même rôle que dans une station de base de réseau cellulaire numérique, un commutateur local destiné à établir directement des communications, par l'intermédiaire d'au moins une antenne, entre des terminaux fixes distants et des terminaux mobiles situés dans le territoire.

Un intérêt majeur de l'invention est que le système est réalisable en utilisant essentiellement des composants déjà existants. Les composants de la partie terrestre d'un micro réseau peuvent être les mêmes que ceux des réseaux de radio téléphonie cellulaire existant à l'heure actuelle, tel que le système GSM en accès multiple à répartition temporelle, dit AMRT ou TDMA. Les micro réseaux peuvent également utiliser les composants de systèmes à répartition fréquentielle et peuvent s'adapter aux systèmes à venir, tels que ceux connus sous la dénomination GPRS et UMTS. Les liaisons avec le satellite peuvent être réalisées par des techniques existantes, en particulier celles fondées sur la technologie dite "relais de trame" ou "frame relay", avec raccordement en étoile au centre de communication et de contrôle.

Les liaisons avec le satellite peuvent être réalisées par des techniques existantes, en particulier celles fondées sur la.technologie dite "à relais de trame" ou "frame relay" avec raccordement en étoile au centre de communication et de contrôle à l'aide de terminaux à antenne dite VSAT (antenne de très faible ouverture). Les liaisons par satellite sont pré-affectées à chaque station de base.

D'autres techniques d'adressage, utilisant par exemple un protocole de type Internet ou d'allocation de ressources par accès multiple à allocation à la demande (DAMA) peuvent être employées.

Dans un mode avantageux de réalisation du système, les ressources des liens par satellite sont préaffectées à chaque station de base.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 est une représentation schématique de la répartition géographique du centre de communication et de contrôle et de quelques stations de base d'un système ;
- la figure 2 est un schéma synoptique montrant une architecture possible du centre de communication et de contrôle, avec plus de détails que sur la figure 1,
- la figure 3, similaire à la figure 2, montre une architecture possible d'une station de base,
- la figure 4 est un schéma destiné à montrer l'interface du centre de communication et d'une station de base avec le lien satellite.

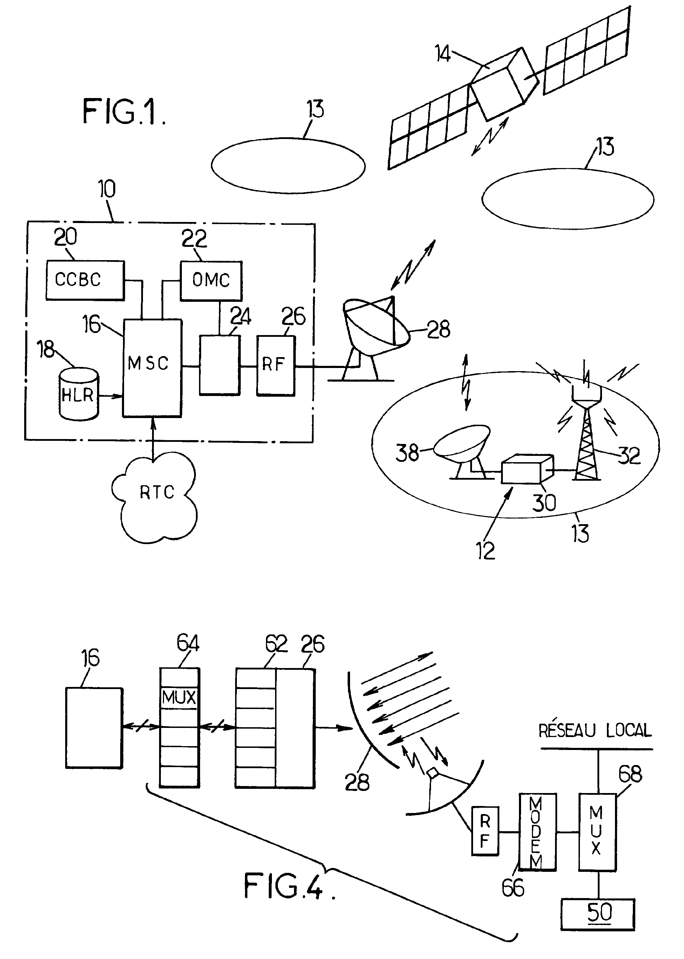

Le système intégré dont l'architecture d'ensemble est montrée en figure 1 permet de fournir des services de téléphonie et de transmission de données à des terminaux mobiles et/ou fixes entre eux et avec un réseau public, en utilisant de façon optimale des liaisons par satellite. Le système comprend un centre de communication et de contrôle 10 et des stations de base terrestres 12 placées à distance du centre 10 et desservant des territoires qui seront en général disjoints. Les liaisons des stations de base 12 avec le centre de communication 10 s'effectuent par l'intermédiaire d'au moins un satellite de retransmission 14, qui aura généralement un faisceau unique recouvrant l'ensemble des territoires 13, mais peut être à faisceaux multiples à condition qu'il soit équipé de moyens d'interconnexion des faisceaux. Il peut être prévu plusieurs centres de communication, notamment lorsque l'on souhaite affecter des centres de communication différents à des communications de nature différente, par exemple en fonction de leur destination (nationale ou internationale).

Contrairement à la disposition adoptée dans un réseau de téléphonie numérique cellulaire classique, tel qu'un réseau GSM (norme GSM 01.02/4), les stations de base sont équipées des moyens nécessaires pour assurer la gestion et le routage des communications à l'intérieur du territoire qu'elles desservent de sorte que chaque territoire constitue un micro réseau autonome, disposant de sa propre capacité de commutation. Ainsi, il peut n'être pas fait appel aux moyens du centre 10 pour la gestion des appels entre terminaux "locaux" ou en itinérance dans un même territoire. Le trafic reste local et ne charge pas les liaisons à longue distance.

Les éléments essentiels d'un centre de communication et de contrôle 10 sont illustrés en figure 1. Ils comprennent le commutateur 16 de gestion des appels permettant également d'accéder à un réseau public de téléphonie, tel que le réseau commuté RTC. Pour permettre cette gestion, le commutateur 16 est relié à un enregistreur de localisation nominal 18, dit HLR, constitué par une base de données, associé en général à un centre d'authentification des abonnés du système. Ces éléments 16 et 18, ainsi qu'un centre de facturation 20 et un centre d'exploitation et de maintenance 22 peuvent être d'un genre couramment utilisé dans les réseaux existants de téléphonie cellulaire numérique.

De plus le centre 10 comprend des moyens permettant d'établir des liaisons par le satellite 14, représenté sous forme d'un centralisateur 24 dont une constitution possible sera donnée plus loin, d'un émetteur à hyper fréquence 26 et d'une antenne 28 qui sera généralement de grand diamètre pour établir des liaisons avec un satellite en orbite géostationnaire.

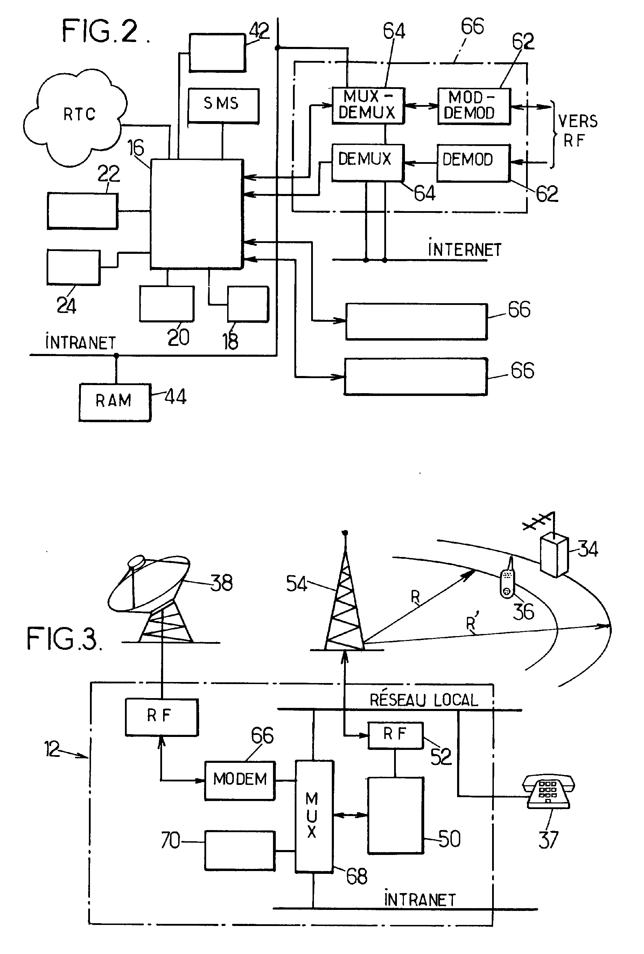

Chaque station de base 12 sera également décrite plus loin. A ce stade il faut relever qu'elle comporte un sous-ensemble de station de base 30 ayant, en plus d'un émetteur-récepteur, d'un moteur et d'un contrôleur dont le rôle est le même que dans une station de base de réseau cellulaire classique, un commutateur local 16. Ces éléments permettent, par l'intermédiaire d'une antenne 32, de communiquer avec des terminaux fixes distants 34 et des terminaux mobiles 36, ainsi éventuellement qu'avec des terminaux fixes 37 reliés à la station de base par un réseau filaire local (figure 3). Plusieurs antennes orientées vers des sites différents peuvent être prévues. Une antenne généralement parabolique 38, dont le diamètre peut être plus faible que celui de l'antenne 28, reçoit des émissions provenant du satellite 14 et émet vers lui.

La bande passante des liaisons par satellite de chaque station de base est dimensionnée en fonction du trafic à écouter et des débits moyens de chacun des flux pour la voix, les données et la signalisation. Pour économiser au maximum la bande passante, on utilisera généralement un algorithme de compression donnant un taux de compression supérieur à celui adopté pour le GSM. On utilisera généralement un algorithme de compression réduisant le débit à une valeur notablement inférieure à 64 kbits/s.

Les liaisons par satellite des stations de base 12 avec le centre de communication et de contrôle 10 peuvent être permanentes et à capacité constante, en mode un seul canal par porteuse (mode SCPC). Toutefois, notamment pour les stations desservant des territoires générant peu de trafic externe, il est avantageux d'adopter un établissement des liaisons à la demande, avec une bande passante adaptée à tout moment, en mode "accès multiple à allocation à la demande" (mode DAMA).

Dans les systèmes où le trafic entre deux micro-réseaux particuliers est particulièrement important, des liaisons satellite directes peuvent être prévues entre ces deux micro-réseaux, ce qui réduit le délai de transmission en supprimant un trajet descendant. Il est également possible dans ce cas de prévoir une liaison terrestre directe par faisceau hertzien par exemple entre deux stations de base.

### CONSTITUTION ET LIAISONS TERRESTRES D'UN CENTRE DE COMMUNICATION ET DE CONTROLE

Le centre 10 dont la constitution générale est montrée en figure 2 comporte le commutateur 16 de gestion des appels relié aux composants déjà mentionnés. Le commutateur peut également être relié à des organes assurant des fonctions supplémentaires tels qu'un centre d'envoi de messages courts et de boîte vocale 42.Le centralisateur peut être constitué de plusieurs modules affectés chacun à un groupe de stations de base et ayant chacun un groupe de modulateurs - démodulateurs 62 associés chacun à un multiplexeur - démultiplexeur 64. L'un de ces ensembles peut être affecté uniquement au trafic entrant et dans ce cas comporter uniquement un démodulateur et un démultiplexeur. Les modules peuvent être reliés à des réseaux locaux ou étendus, dits LAN ou WAN, ainsi qu'à un réseau Internet ou un réseau Intranet muni éventuellement d'une mémoire 44 de stockage et d'envoi de données.

### CONSTITUTION ET LIAISONS TERRESTRES D'UN MICRO-RESEAU

Le micro-réseau dont la constitution générale est montrée en figure 3 comporte une station de base 12 ayant un commutateur local 50. Ce commutateur est relié aux moyens radio électrique de communication avec les terminaux répartis dans le territoire desservi, comportant au moins un émetteur - récepteur 52 et au moins une antenne 54, de même nature que ceux utilisés dans un réseau GSM. Les terminaux desservis par voie radioélectrique peuvent comporter notamment :
- des terminaux portables classiques 36, permettant typiquement alors une liaison jusqu'à une distance R de 7 km environ de l'antenne en terrain libre et jusqu'à2,5 km environ à l'intérieur des bâtiments,
- des terminaux fixes 34, permettant d'arriver pratiquement à une portée R' de 30 km environ avec une antenne directionnelle, par exemple yagi, destinés à un usage domestique ou public.

De plus le commutateur peut être relié à un réseau terrestre local 56 et/ou à des réseaux de données spécialisés, tels que des réseaux 58 d'accès à Internet, des réseaux locaux (comportant par exemple des cybercafés ou des points d'accès public), des réseaux Intranet, etc..., éventuellement par l'intermédiaire de modems.

De façon générale, les services pouvant être offerts dans un territoire sont de nature très variée et être tous ceux disponibles sur un réseau GSM, tels que
- voix, généralement avec un taux de compression supérieur à celui du GSM ,
- messagerie vocale avec notification de message par affichage de message court (SMS)
- renvoi d'appel, affichage du numéro appelant,
- numéro d'appel unique pour les services voix, fax et données.

Des services s'ajoutant à ceux de type GSM peuvent être prévus tels que ceux que peut supporter un réseau VSAT, par exemple liaisons point à point, maillées ou non, etc...

### LIAISONS PAR SATELLITE

Le mode de liaison par satellite illustré en figure 4 utilise une pré-affectation permanente des porteuses provenant des stations de base (porteuses entrantes).

L'antenne 28 du centre 10 est reliée à un émetteur - récepteur 26 associé aux modulateurs - démodulateurs 62. Les signaux en bande de base transportés par les porteuses sont échangés avec les multiplexeurs - démultiplexeurs 64 ou MUX-DEMUX constituant le noeud du système avec le commutateur de gestion des appels 16. Ces MUX-DEMUX sont contrôlés par un gestionnaire de ressources satellite non représenté.

Dans un mode de réalisation, qu'on peut considérer comme représentatif, un nombre adapté de jeux de moyens satellite est prévu, chaque jeu ayant :
- une porteuse à bande passante large unique affectée au trafic sortant vers les stations de base, avec adressage par en-tête d'identification, et
- 8 porteuses ayant chacune une bande passante réduite (256 kbits/s par exemple), affectées chacune à une station de base.

Chaque station de base comporte de son côté un modulateur - démodulateur 66 associé à un MUX-DEMUX 68. Les signaux transitent entre le MUX-DEMUX 68 et le modulateur-démodulateur ou MODEM 66 en mode par paquets ou à relais de trames Un détecteur de panne 70 surveille le fonctionnement du MODEM. Le MUX-DEMUX 68 peut encore être relié à un ou des réseaux locaux. Chaque MUX assure une fonction de multiplexage statistique et de gestion des priorités. Dans ce but il est précédé de mémoires tampons de capacité convenable constituant des files d'attente, ou incorpore de telles mémoires.

L'invention ne se limite pas au mode particulier de réalisation qui a été décrit en détail. Elle peut être utilisée avec des réseaux terrestres et par satellite de nature différente de celles envisagées plus haut.

## Revendications

1. Système de télécommunication permettant de mettre en liaison des terminaux répartis dans plusieurs territoires (13) constituant des micro-réseaux, entre eux et avec au moins un réseau d'opérateur, ce système comprenant au moins un satellite relais (14) muni de moyens de liaison d'une part avec au moins un centre de communication et de contrôle (10) raccordé à un réseau d'opérateur, d'autre part avec plusieurs stations de base (12) affectées chacune à un territoire et comportant chacune un commutateur (16) qui est seul apte à établir des liaisons locales entres les terminaux distants fixes et mobiles répartis dans les territoire et qui est seul apte à établir des liaisons avec le centre de communication uniquement par l'intermédiaire du satellite, ces dernières liaisons étant uniquement en vue d'établissement des communications autres qu'internes au territoire.

2. Système suivant la revendication 1, **caractérisé en ce que** la partie terrestre des stations de base est constituée essentiellement par des composants de réseaux cellulaires numériques de télécommunication.

3. Système suivant la revendication 1 ou 2, **caractérisé en ce que** chaque station de base (12) comporte un sous-ensemble (30) ayant, en plus d'au moins un émetteur-récepteur et d'au moins un contrôleur remplissant le même rôle que dans une station de base de réseau cellulaire numérique, un commutateur local destiné à établir seul et directement des communications, par l'intermédiaire d'au moins une antenne (32), entre les terminaux fixes distants (34) et les terminaux mobiles (36) situés dans le territoire.

4. Système suivant l'une quelconque des revendications 1 à 3, **caractérisé par** des liaisons satellite directes entre deux micro-réseaux et par des capacités d'interconnexion de trafic à bord du satellite.

5. Système suivant l'une quelconque des revendications 1 à 4, **caractérisé par** une liaison terrestre directe, filaire ou par faisceau hertzien, entre deux stations de base.

6. Système suivant l'une quelconque des revendications 1 à 4, **caractérisé en ce que** les liaisons par l'intermédiaire du satellite s'effectuent sur porteuse à bande passante large affectée au trafic sortant vers les stations de base, avec adressage par en-tête d'identification, et sur plusieurs porteuses ayant chacune une bande passante réduite affectées chacune à une station de base pour le trafic sortant.

7. Système suivant l'une quelconque des revendications 1 à 6, **caractérisé en ce que** les ressources des liaisons par satellite sont préaffectées aux stations de base.

8. Système suivant l'une quelconque des revendications 1 à 6, comprenant plusieurs centres de communication et des moyens de sélection de centre au niveau des stations de base.

9. Système suivant l'une quelconque des revendications 1 à 8, **caractérisé en ce que** le commutateur d'une station de base est seul apte à établir des communications avec un réseau terrestre local du territoire.

10. Station de base pour système de télécommunication numérique suivant l'une quelconque des revendications précédentes comprenant un commutateur (16) seul apte à établir des liaisons locales par voie radioélectrique entre des terminaux répartis dans un territoire desservi par la station de base et des moyens d'établissement de liaisons avec un centre de communication par l'intermédiaire d'un satellite relais, en vue d'établissement de communications autres qu'internes au territoire.
